# EUROPÄISCHE PATENTSCHRIFT

(11) **EP 4 272 524 B1**
(45) Veröffentlichungstag und Bekanntmachung des Hinweises auf die Patenterteilung: **08.10.2025**
(21) Anmeldenummer: 23170390.1
(22) Anmeldetag: 27.04.2023
(51) Int. Cl.: A01B 51/02, B60K 17/28, B60K 25/00, B62D 49/06, B62D 59/04

(54) **LANDWIRTSCHAFTLICHE FAHRZEUGKOMBINATION**
AGRICULTURAL VEHICLE COMBINATION
COMBINAISON DE VÉHICULE AGRICOLE

(30) Priorität: 05.05.2022 DE 102022111164
(43) Veröffentlichungstag der Anmeldung: 08.11.2023
(73) Patentinhaber: Deere & Company, Moline, IL 61265 (US)
(72) Erfinder: Meid, Michael, Mannheim (DE); Billich, Manuel, Mannheim (DE)
(74) Vertreter: Dehnhardt, Florian Christopher

(56) Entgegenhaltungen:
- DE-C1- 19 950 138
- RU-C1- 2 654 743
- SU-A1- 1 463 149
- US-A1- 2020 296 876

## Beschreibung

Die Erfindung betrifft eine landwirtschaftliche Fahrzeugkombination.

Um sämtlichen in der Landwirtschaft auftretenden Bearbeitungssituationen gerecht zu werden, sind Anwender häufig gezwungen, landwirtschaftliche Traktoren verschiedener Leistungsklassen vorzuhalten. So ist beim Pflügen sowie bei Transportarbeiten ein vergleichsweise leistungsstarker bzw. schwerer Traktor von Vorteil, wohingegen bei der Durchführung von Lade-, Spritz- oder Säarbeiten in erster Linie Fragen der Wendigkeit und der möglichst geringen Bodenverdichtung eine Rolle spielen. Letzteres spricht jedoch für die Verwendung eines verhältnismäßig kompakten bzw. leichten Traktors.

Eine landwirtschaftliche Fahrzeugkombination nach dem Oberbegriff des Anspruchs 1 ist aus der Druckschrift US 2020/296876 A1 bekannt.

Angesichts dessen ist es Aufgabe der vorliegenden Erfindung, eine kostengünstige Möglichkeit anzugeben, die die Notwendigkeit der Anschaffung landwirtschaftlicher Traktoren verschiedener Leistungsklassen weitgehend überflüssig macht.

Diese Aufgabe wird durch eine landwirtschaftliche Fahrzeugkombination mit den Merkmalen des Patentanspruchs 1 gelöst.

Die insofern vorgesehene landwirtschaftliche Fahrzeugkombination umfasst einen mittels einer Hauptantriebseinheit betriebenen landwirtschaftlichen Traktor und eine Zusatzantriebseinheit, die an dem landwirtschaftlichen Traktor mittels eines Dreipunkt-Krafthebers abnehmbar angebracht ist und eine seitens eines Zusatzaggregats antreibbare Hilfsachse aufweist.

Auf diese Weise ist es möglich, einen verhältnismäßig kompakten bzw. leichten Traktor durch Anbringung der Zusatzantriebseinheit für Anwendungen mit erhöhtem Zugkraftbedarf aufzurüsten, ohne dass die Anschaffung eines eigens hierfür vorgesehenen weiteren Traktors erforderlich wäre. Dies kommt insbesondere kleineren landwirtschaftlichen Betrieben mit begrenzten finanziellen Mitteln entgegen.

Die Steuerung der Zusatzantriebseinheit, insbesondere eines über die Hinterachse auf den Erdboden zu übertragenden Antriebsmoments, erfolgt hierbei seitens einer in dem landwirtschaftlichen Traktor vorgesehenen Kontrolleinheit. Diese koordiniert über eine zwischen landwirtschaftlichem Traktor und Zusatzantriebseinheit hergestellte Kommunikationsschnittstelle, beispielsweise in Gestalt einer ISOBUS-Verbindung, den Betrieb der Zusatzantriebseinheit mit demjenigen der Hauptantriebseinheit im landwirtschaftlichen Traktor.

Die Hauptantriebseinheit umfasst typischerweise einen als Dieselmotor ausgebildeten Verbrennungsmotor, der über ein herkömmliches (Lastschalt-) Getriebe mit einer angetriebenen Hinterachse bzw. einer Zapfwelle sowie weiteren Betriebseinrichtungen des landwirtschaftlichen Traktors in Antriebsverbindung steht. Zu den weiteren Betriebseinrichtungen gehört beispielweise ein von einer Hochdruckpumpe gespeistes Hydrauliksystem, das der Versorgung einer hydraulischen Lenk- und Bremsanlage sowie hydraulischer Steuerventilblöcke (sog. SCVs) dient, die sich im Heckbereich des landwirtschaftlichen Traktors befinden und einen Betrieb hydraulischer Arbeitsfunktionen von daran anzuschließenden Anbau- oder Zusatzgeräten erlauben.

Vorteilhafte Weiterbildungen der erfindungsgemäßen landwirtschaftlichen Fahrzeugkombination gehen aus den Unteransprüchen hervor.

Erfindungsgemäß weist das zum Antrieb der Hilfsachse vorgesehene Zusatzaggregat einen Elektromotor auf. Der Elektromotor kann hierbei über ein Zwischengetriebe mit von der Hilfsachse umfassten Bodeneingriffsmitteln zur Fortbewegung der Zusatzantriebseinheit in Verbindung stehen. Bei den Bodeneingriffsmitteln handelt es sich beispielsweise um Räder. Da die Zusatzantriebseinheit vorrangig in Arbeitssituationen mit erhöhtem Zugkraftbedarf in einem begrenzten Fahrtgeschwindigkeitsbereich von bis zu 10 bis 20 km/h Einsatz findet, kann das Zwischengetriebe baulich vergleichsweise einfach ausgebildet sein.

Wird die Zusatzantriebseinheit nicht benötigt, beispielsweise bei der Durchführung einer Straßenfahrt, so lässt sich diese mittels des Dreipunkt-Krafthebers des landwirtschaftlichen Traktors in eine angehobene Transportstellung verbringen, sodass der Radantrieb außer Kontakt mit dem Erdboden steht.

Des Weiteren kann im Heckbereich der Zusatzantriebseinheit ein weiterer Dreipunkt-Kraftheber zur Anbringung eines Anbau- oder Zusatzgeräts angeordnet sein. Dieser weist vorzugsweise dieselbe Kategorie auf wie der dem landwirtschaftlichen Traktor zugeordnete Dreipunkt-Kraftheber, sodass sich vorhandene Anbau- oder Zusatzgeräte an beiden Dreipunkt-Krafthebern universell verwenden lassen. Die Betätigung des weiteren Dreipunkt-Krafthebers erfolgt mittels eines zum Heben und Senken zugehöriger Unterlenker vorgesehenen Hubwerks. Bevorzugt ist das Hubwerk von Seiten des landwirtschaftlichen Traktors hydraulisch betätigbar, wozu dieses an einem der hydraulischen Steuerventilblöcke des landwirtschaftlichen Traktors angeschlossen ist. Die Ansteuerung des betreffenden Steuerventilblocks und damit des Hubwerks kann hierbei auf Veranlassung der Kontrolleinheit erfolgen, beispielsweise in Abhängigkeit eines über eine Nutzerschnittstelle eingegebenen Bedienerbefehls.

In diesem Zusammenhang besteht die Möglichkeit, dass sich im Heckbereich der Zusatzantriebseinheit eine weitere Zapfwelle und/oder weitere hydraulische Steuerventilblöcke befinden, die einen Betrieb mechanischer bzw. hydraulischer Arbeitsfunktionen eines an dem weiteren Dreipunkt-Kraftheber angebrachten Anbau- oder Zusatzgeräts erlauben. Im einfachsten Fall werden die weitere Zapfwelle und/oder die weiteren hydraulischen Steuerventilblöcke betrieben, indem in Form eines mechanischen bzw. hydraulischen "Durchgriffs" eine direkte Verbindung mit der Zapfwelle bzw. den hydraulischen Steuerventilblöcken des landwirtschaftlichen Traktors hergestellt ist.

Alternativ kann die Zapfwelle der Zusatzantriebseinheit auch mittels des Zusatzaggregats angetrieben werden. Umfasst das Zusatzaggregat einen Elektromotor, so kann in einem Generatorbetrieb des Elektromotors vorgesehen sein, die beim Bremsen des Radantriebs freigesetzte Energie zu rekuperieren und in einem Akkumulator zwischenzuspeichern, der seinerseits baulicher Bestandteil des Zusatzaggregats sein kann.

Dies eröffnet unter anderem die Möglichkeit, durch Abrufen der im Akkumulator zwischengespeicherten elektrischen Energie mittels des Elektromotors über ein Getriebe, insbesondere ein Leistungsverzweigungsgetriebe, gezielt ein die Hauptantriebseinheit unterstützendes Antriebsmoment in die Zapfwelle des landwirtschaftlichen Traktors einzuspeisen (sog. Power Boost). Mit anderen Worten ist das Zusatzaggregat in einem solchen Fall zur Antriebsunterstützung der von dem landwirtschaftlichen Traktor umfassten Hauptantriebseinheit ausgebildet. Andererseits kann die im Akkumulator zwischengespeicherte elektrische Energie auch dazu genutzt werden, um elektrische Arbeitsaggregate eines an dem weiteren Dreipunkt-Kraftheber angebrachten Anbau- oder Zusatzgeräts zu betreiben.

Um die Lenkbarkeit der Fahrzeugkombination zu verbessern, ist es möglich, dass die Zusatzantriebseinheit eine Hilfslenkung aufweist, die nach Maßgabe einer traktorseitigen Lenkvorgabe betätigbar ist. Die Hilfslenkung kann entweder aktiv als elektrische, elektrohydraulische oder hydraulische Lenkung, oder aber passiv als Nachlauflenkung ausgeführt sein, wobei in letzterem Fall eine Sperrung beim Rückwärtsfahren erfolgt, um ein Rangieren der Fahrzeugkombination zu vereinfachen.

Eine weitere Möglichkeit sieht vor, dass der Dreipunkt-Kraftheber des landwirtschaftlichen Traktors mit einem hydraulisch oder elektrisch längenverstellbar ausgebildeten Oberlenker ausgestattet ist, wobei die Längenverstellung im Sinne einer Veränderung der über die Hilfsachse auf den Erdboden ausgeübten Aufstandskräfte erfolgt. Die Längenverstellung erfolgt derart, dass nach Maßgabe von Masse und Schwerpunkt des an dem weiteren Dreipunkt-Kraftheber angebrachten Anbau- oder Zusatzgeräts die Aufstandskräfte zwischen der Hilfsachse und der angetriebenen Hinterachse des landwirtschaftlichen Traktors derart verteilt werden, dass eine möglichst hohe Traktion erzielt wird.

Die erfindungsgemäße landwirtschaftliche Fahrzeugkombination wird im Folgenden anhand der beigefügten Zeichnungen näher beschrieben. Dabei beziehen sich identische Bezugszeichen auf übereinstimmende oder bezüglich ihrer Funktion vergleichbare Komponenten. Es zeigen:
- Fig. 1: ein erstes Beispiel einer nicht erfindungsgemäßen landwirtschaftlichen Fahrzeugkombination, und
- Fig. 2: ein zweites Ausführungsbeispiel der erfindungsgemäßen landwirtschaftlichen Fahrzeugkombination.

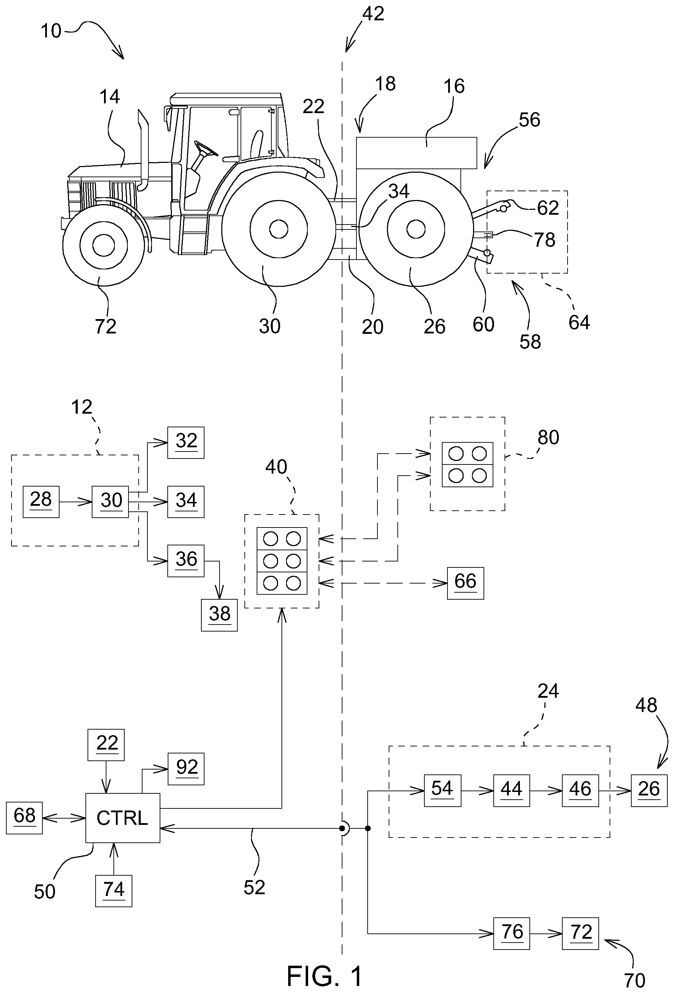

Fig. 1 zeigt ein erstes Beispiel einer landwirtschaftlichen Fahrzeugkombination.

Die landwirtschaftliche Fahrzeugkombination 10 umfasst einen mittels einer Hauptantriebseinheit 12 betriebenen landwirtschaftlichen Traktor 14 und eine Zusatzantriebseinheit 16. Die Zusatzantriebseinheit 16 ist an dem landwirtschaftlichen Traktor 14 mittels eines Dreipunkt-Krafthebers 18 über zugehörige Unterlenker 20 sowie einen Oberlenker 22 abnehmbar angebracht und weist eine seitens eines Zusatzaggregats 24 antreibbare Hilfsachse 26 auf.

Beispielsgemäß umfasst die in dem landwirtschaftlichen Traktor 14 befindliche Hauptantriebseinheit 12 einen als Dieselmotor ausgebildeten Verbrennungsmotor 28, der über ein herkömmliches (Lastschalt-) Getriebe 30 mit einer angetriebenen Hinterachse 32 bzw. einer Zapfwelle 34 sowie weiteren Betriebseinrichtungen 36 des landwirtschaftlichen Traktors 14 in Antriebsverbindung steht. Zu den weiteren Betriebseinrichtungen 36 gehört ein von einer (nicht dargestellten) Hochdruckpumpe gespeistes Hydrauliksystem, das der Versorgung einer hydraulischen Lenk- und Bremsanlage 38 sowie hydraulischer Steuerventilblöcke 40 dient, die sich im Heckbereich 42 des landwirtschaftlichen Traktors 14 befinden und einen Betrieb hydraulischer Arbeitsfunktionen von daran anzuschließenden Anbau- oder Zusatzgeräten erlauben.

Im vorliegenden Fall weist das zum Antrieb der Hilfsachse 26 vorgesehene Zusatzaggregat 24 einen eigenen Verbrennungsmotor 44 auf. Der weitere Verbrennungsmotor 44 steht über ein Zwischengetriebe 46 mit von der Hilfsachse 26 umfassten Bodeneingriffsmitteln 48 in Form von Rädern zur Fortbewegung der Zusatzantriebseinheit 16 in Verbindung.

Die Steuerung der Zusatzantriebseinheit 16, genauer gesagt eines über die Hilfsachse 26 mittels des weiteren Verbrennungsmotors 44 auf den Erdboden zu übertragenden Antriebsmoments, erfolgt hierbei seitens einer in dem landwirtschaftlichen Traktor 14 vorgesehenen Kontrolleinheit 50. Die Kontrolleinheit 50 koordiniert über eine Kommunikationsschnittstelle, bei der es sich beispielsgemäß um eine ISOBUS-Verbindung 52 handelt, den Betrieb der Zusatzantriebseinheit 16 mit demjenigen der Hauptantriebseinheit 12 im landwirtschaftlichen Traktor 14. Hierzu kommuniziert die ISOBUS-Verbindung 52 mit einem von dem Zusatzaggregat 24 umfassten Motorsteuergerät 54 des weiteren Verbrennungsmotors 44.

Im Heckbereich 56 der Zusatzantriebseinheit 16 ist ein weiterer Dreipunkt-Kraftheber 58 angeordnet, an dem über jeweilige Unterlenker 60 sowie einen Oberlenker 62 ein (schematisch dargestelltes) Anbau- oder Zusatzgerät 64 abnehmbar angebracht ist. Der weitere Dreipunkt-Kraftheber 58 weist dieselbe Kategorie auf wie der dem landwirtschaftlichen Traktor 14 zugeordnete Dreipunkt-Kraftheber 18, sodass sich vorhandene Anbau- oder Zusatzgeräte an beiden Dreipunkt-Krafthebern 18, 58 universell verwenden lassen. Die Betätigung des weiteren Dreipunkt-Krafthebers 58 erfolgt mittels eines zum Heben und Senken der Unterlenker 60 vorgesehenen Hubwerks 66.

Vorliegend ist das Hubwerk 66 von Seiten des landwirtschaftlichen Traktors 14 hydraulisch betätigbar, wozu dieses an einem der hydraulischen Steuerventilblöcke 40 des landwirtschaftlichen Traktors 14 angeschlossen ist. Die Ansteuerung des betreffenden Steuerventilblocks und damit des Hubwerks 66 erfolgt hierbei auf Veranlassung der Kontrolleinheit 50, beispielsweise in Abhängigkeit eines über eine Nutzerschnittstelle 68 eingegebenen Bedienerbefehls.

Um die Lenkbarkeit der Fahrzeugkombination 10 zu verbessern, weist die Zusatzantriebseinheit 16 eine Hilfslenkung 70 auf, die nach Maßgabe einer traktorseitigen Lenkvorgabe betätigbar ist. Die Hilfslenkung 70 ist entweder aktiv als elektrische, elektrohydraulische oder hydraulische Lenkung, oder aber passiv als Nachlauflenkung ausgeführt, wobei in letzterem Fall eine Sperrung beim Rückwärtsfahren erfolgt, um ein Rangieren der Fahrzeugkombination 10 zu vereinfachen. Im Falle einer aktiven Hilfslenkung 70 ergibt sich die traktorseitige Lenkvorgabe aus einem im Bereich einer lenkbaren Vorderachse 72 des landwirtschaftlichen Traktors 14 mittels eines Drehwinkelsensors 74 erfassten Lenkeinschlag, wobei dieser von der Kontrolleinheit 50 zur entsprechenden Ansteuerung eines elektrischen, elektrohydraulischen oder hydraulischen Stellgebers 76, der der Lenkung der Hilfsachse 26 dient, herangezogen wird. Die Ansteuerung des Stellgebers 76 seitens der Kontrolleinheit 50 erfolgt hierbei über die ISOBUS-Verbindung 52.

Zusätzlich ist der Oberlenker 22 des Dreipunkt-Krafthebers 18 am landwirtschaftlichen Traktor 14 hydraulisch längenverstellbar ausgebildet. Die Längenverstellung erfolgt seitens der Kontrolleinheit 50 im Sinne einer Veränderung der über die Hilfsachse 26 auf den Erdboden ausgeübten Aufstandskräfte, und zwar derart, dass nach Maßgabe von Masse und Schwerpunkt des an dem weiteren Dreipunkt-Kraftheber 58 angebrachten Anbau- oder Zusatzgeräts 64 die Aufstandskräfte zwischen der Hilfsachse 26 und der angetriebenen Hinterachse 32 des landwirtschaftlichen Traktors 14 derart verteilt werden, dass eine möglichst hohe Traktion erzielt wird.

Des Weiteren befindet sich im Heckbereich 56 der Zusatzantriebseinheit 16 eine weitere Zapfwelle 78 und/oder weitere hydraulische Steuerventilblöcke 80, die einen Betrieb mechanischer bzw. hydraulischer Arbeitsfunktionen des an dem weiteren Dreipunkt-Kraftheber 58 angebrachten Anbau- oder Zusatzgeräts 64 erlauben. Im Falle der in Fig. 1 dargestellten Ausführung der Zusatzantriebseinheit 16 erfolgt der Betrieb der weiteren Zapfwelle 78 und/oder der weiteren hydraulischen Steuerventilblöcke 80, indem in Form eines mechanischen bzw. hydraulischen "Durchgriffs" eine direkte Verbindung mit der Zapfwelle 34 bzw. den hydraulischen Steuerventilblöcken 40 des landwirtschaftlichen Traktors 14 hergestellt ist.

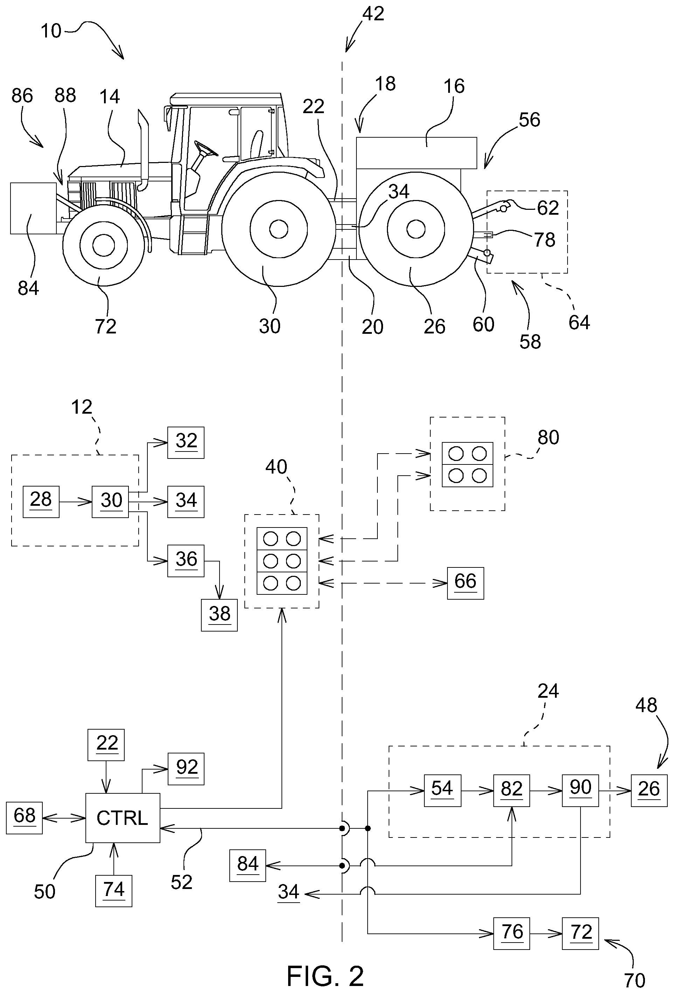

Eine davon abweichende erfindungsgemäße Ausführung der Zusatzantriebseinheit ist in Fig. 2 wiedergegeben. Diese sieht vor, dass die weitere Zapfwelle 78 der Zusatzantriebseinheit 16 mittels eines von dem Zusatzaggregat 24 umfassten Elektromotors 82, der anstelle des Verbrennungsmotors 44 vorgesehen ist, angetrieben wird. Hierbei ist in einem Generatorbetrieb des Elektromotors 82 vorgesehen, die beim Bremsen der Bodeneingriffsmittel 48 freigesetzte Energie zu rekuperieren und in einem Akkumulator 84 zwischenzuspeichern. Gemäß Fig. 2 ist der Akkumulator 84 an einem im Frontbereich 86 des landwirtschaftlichen Traktors 14 vorgesehenen Dreipunkt-Kraftheber 88 angebracht, der Akkumulator 84 kann jedoch auch baulicher Bestandteil des Zusatzaggregats 24 sein.

Durch Abrufen der im Akkumulator 84 zwischengespeicherten elektrischen Energie lässt sich mittels des Elektromotors 82 vorliegend über ein Leistungsverzweigungsgetriebe 90 gezielt ein die Hauptantriebseinheit 12 unterstützendes Antriebsmoment in die Zapfwelle 34 des landwirtschaftlichen Traktors 14 einzuspeisen (sog. Power Boost). Mit anderen Worten ist das Zusatzaggregat 24 in einem solchen Fall zur Antriebsunterstützung der von dem landwirtschaftlichen Traktor 14 umfassten Hauptantriebseinheit 12 ausgebildet. Andererseits kann die im Akkumulator 84 zwischengespeicherte elektrische Energie auch dazu genutzt werden, um (nicht gezeigte) elektrische Arbeitsaggregate des an dem weiteren Dreipunkt-Kraftheber 58 angebrachten Anbau- oder Zusatzgeräts 64 zu betreiben.

Wird die Zusatzantriebseinheit 16 nicht benötigt, beispielsweise bei der Durchführung einer Straßenfahrt, so lässt sich diese mittels des Dreipunkt-Krafthebers 18 des landwirtschaftlichen Traktors 14 in eine angehobene Transportstellung verbringen, sodass der Radantrieb außer Kontakt mit dem Erdboden steht. Hierzu können die Unterlenker 20 des Dreipunkt-Krafthebers 18 mittels eines zugehörigen Hubwerks 92 auf Veranlassung der Kontrolleinheit 50 abhängig von einem über die Nutzerschnittstelle 68 eingegebenen Bedienbefehl gehoben oder gesenkt werden.

## Patentansprüche

1. Landwirtschaftliche Fahrzeugkombination, umfassend einen mittels einer Hauptantriebseinheit (12) betriebenen landwirtschaftlichen Traktor (14) und eine Zusatzantriebseinheit (16), die an dem landwirtschaftlichen Traktor (14) mittels eines Dreipunkt-Krafthebers (18) abnehmbar angebracht ist und eine seitens eines Zusatzaggregats (24) antreibbare Hilfsachse (26) mit Bodeneingriffsmitteln (48) aufweist, wobei das zum Antrieb der Hilfsachse (26) vorgesehene Zusatzaggregat (24) einen Elektromotor (82) aufweist,
**dadurch gekennzeichnet, dass**
das Zusatzaggregat (24) zur Antriebsunterstützung der Hauptantriebseinheit (12) dahingehend ausgebildet ist, dass in einem Generatorbetrieb des Elektromotors (82) die beim Bremsen der Bodeneingriffsmittel (48) freigesetzte Energie rekuperiert und in einem Akkumulator (84) zwischengespeichert wird, um durch Abrufen der im Akkumulator (84) zwischengespeicherten elektrischen Energie mittels des Elektromotors (82) über ein Getriebe ein die Hauptantriebseinheit (12) unterstützendes Antriebsmoment in eine Zapfwelle (34) des landwirtschaftlichen Traktors (14) einzuspeisen.

2. Fahrzeugkombination nach Anspruch 1, **dadurch gekennzeichnet, dass** im Heckbereich (56) der Zusatzantriebseinheit (16) ein weiterer Dreipunkt-Kraftheber (58) zur Anbringung eines Anbau- oder Zusatzgeräts (64) angeordnet ist.

3. Fahrzeugkombination nach Anspruch 2, **dadurch gekennzeichnet, dass** sich im Heckbereich (56) der Zusatzantriebseinheit (16) eine Zapfwelle (78) und/oder hydraulische Steuerventilblöcke (80) befinden, die einen Betrieb hydraulischer Arbeitsfunktionen eines an dem weiteren Dreipunkt-Kraftheber (58) angebrachten Anbau- oder Zusatzgeräts (64) erlauben.

4. Fahrzeugkombination nach wenigstens einem der vorhergehenden Ansprüche, **dadurch gekennzeichnet, dass** die Zusatzantriebseinheit (16) eine Hilfslenkung (70) aufweist, die nach Maßgabe einer traktorseitigen Lenkvorgabe betätigbar ist.

5. Fahrzeugkombination nach wenigstens einem der vorhergehenden Ansprüche, **dadurch gekennzeichnet, dass** der Dreipunkt-Kraftheber (18) des landwirtschaftlichen Traktors (14) mit einem hydraulisch oder elektrisch längenverstellbar ausgebildeten Oberlenker (22) ausgestattet ist, wobei die Längenverstellung im Sinne einer Veränderung der über die Hilfsachse (26) auf den Erdboden ausgeübten Aufstandskräfte erfolgt.

## Claims

1. Agricultural vehicle combination, comprising an agricultural tractor (14), which is operated using a main drive unit (12), and comprising an ancillary drive unit (16), which is attached removably to the agricultural tractor (14) by means of a three-point power lift (18) and which has an auxiliary axle (26) that can be driven by an ancillary appliance (24) and has a ground-engaging means (48), wherein the ancillary appliance (24) provided for driving the auxiliary axle (26) has an electric motor (82), **characterized in that** the ancillary appliance (24) is configured to provide drive assistance to the main drive unit (12) such that, in a generator operating mode of the electric motor (82), the energy that is released during braking of the ground-engaging means (48) is recuperated and temporarily stored in a storage battery (84) in order to, by retrieving the electrical energy temporarily stored in the storage battery (84), feed, via a gearbox, a drive torque that assists the main drive unit (12) into a power take-off (34) of the agricultural tractor (14) using the electric motor (82).

2. Vehicle combination according to Claim 1, **characterized in that** a further three-point power lift (58) for the attachment of a mounted or ancillary implement (64) is arranged in the rear-end region (56) of the ancillary drive unit (16).

3. Vehicle combination according to Claim 2, **characterized in that**, in the rear-end region (56) of the ancillary drive unit (16), there are situated a power take-off (78) and/or hydraulic control valve blocks (80) which allow operation of hydraulic work functions of a mounted or ancillary implement (64) attached to the further three-point power lift (58).

4. Vehicle combination according to at least one of the preceding claims, **characterized in that** the ancillary drive unit (16) has an auxiliary steering system (70) that can be actuated in accordance with a steering input at the tractor.

5. Vehicle combination according to at least one of the preceding claims, **characterized in that** the three-point power lift (18) of the agricultural tractor (14) is equipped with a hydraulically or electrically length-adjustable upper link (22), wherein the length adjustment is performed for the purposes of varying the contact forces exerted on the ground via the auxiliary axle (26).

## Revendications

1. Combinaison de véhicule agricole, comprenant un tracteur agricole (14) actionné au moyen d'une unité d'entraînement principale (12) et une unité d'entraînement supplémentaire (16) qui est fixée de manière amovible au tracteur agricole (14) au moyen d'un relevage trois points (18) et présente un essieu auxiliaire (26) qui est doté de moyens d'engagement au sol (48) peut être entraîné par un organe auxiliaire (24), l'organe auxiliaire (24) prévu pour l'entraînement de l'essieu auxiliaire (26) comportant un moteur électrique (82), **caractérisé en ce que** l'organe auxiliaire (24) est conçu pour le soutien de l'entraînement de l'unité d'entraînement principale (12) de telle sorte que, dans un mode générateur du moteur électrique (82), l'énergie libérée lors du freinage des moyens d'engagement au sol (48) est récupérée et stockée temporairement dans un accumulateur (84) afin de fournir un couple d'entraînement de soutien à l'unité d'entraînement principale (12) dans une prise de force (34) du tracteur agricole (14) par la récupération de l'énergie électrique stockée temporairement dans l'accumulateur (84) au moyen du moteur électrique (82) par le biais d'une transmission.

2. Combinaison de véhicule agricole selon la revendication 1, **caractérisée en ce que**, dans la zone arrière (56) de l'unité d'entraînement supplémentaire (16), un relevage trois points supplémentaire (58) est disposé pour la fixation d'un équipement de montage ou supplémentaire (64).

3. Combinaison de véhicule agricole selon la revendication 2, **caractérisé en ce que**, dans la zone arrière (56) de l'unité d'entraînement supplémentaire (16), se trouvent une prise de force (78) et/ou des blocs de vannes de commande hydrauliques (80) qui permettent une exécution de fonctions de travail hydrauliques d'un équipement de montage ou supplémentaire (64) fixé sur le relevage trois points supplémentaire (58).

4. Combinaison de véhicule agricole selon au moins l'une des revendications précédentes, **caractérisé en ce que** l'unité d'entraînement supplémentaire (16) présente un système de direction auxiliaire (70) qui peut être actionné conformément à une consigne de direction côté tracteur.

5. Combinaison de véhicule agricole selon au moins l'une des revendications précédentes, **caractérisé en ce que** le relevage trois points (18) du tracteur agricole (14) est équipé d'une barre de poussée supérieure (22) conçue pour un réglage en longueur hydraulique ou électrique, le réglage en longueur s'effectuant dans le but de modifier les forces d'appui exercées sur le sol par le biais de l'essieu auxiliaire (26).
